# EUROPEAN PATENT SPECIFICATION

(11) **EP 2 243 348 B1**
(45) Date of publication and mention of the grant of the patent: **26.12.2012**
(21) Application number: 10160663.0
(22) Date of filing: 22.04.2010
(51) Int. Cl.: A01D 78/00, A01D 78/04

(54) **Multifunction side-delivery rake**
Multifunktioneller Bandrechen
Râteau-faneur de bande multifonctionel

(30) Priority: 23.04.2009 IT PV20090006
(43) Date of publication of application: 27.10.2010
(73) Proprietor: Repossi Macchine Agricole S.r.l., 27022 Casorate Primo (PV) (IT)
(72) Inventor: Repossi, Francesco, 27022 Casorate Primo (PV) (IT); Repossi, Gabriele, 27022 Casorate Primo (PV) (IT)
(74) Representative: Jorio, Paolo

(56) References cited:
- EP-A- 0 978 228
- DE-A1- 3 026 912

## Description

The present invention regards a multifunction side-delivery rake.

As is known, a side-delivery rake is an agricultural machine that enables sweeping and accumulation into windrows of the mowed fodder. Known side-delivery rakes enable in general a limited number of operations to be carried out and for this reason are far from versatile.

Examples of side-delivery rakes are described in DE-A-3026912 and in EP-A-0978288.

The aim of the present invention is to provide a side-delivery rake that enables the limitations mentioned above to be overcome and that, in particular, is versatile.

According to the present invention a multifunction side-delivery rake is provided, as defined in Claim 1.

The multifunction side-delivery rake is of the type having a main frame carried by two wheels, connected to which are two or three raking assemblies provided with combs for forming central or lateral windrows. The side-delivery rake comprises a first raking assembly and a second raking assembly, which are arranged at the front of the main frame to form a central windrow, and a third raking assembly, which is set at the rear of the frame and can be translated laterally in a plane parallel to that of the ground and which, when used simultaneously to one or both of the front assemblies, according to its lateral position, enables formation of one lateral windrow, of two lateral windrows of small size, or overturning and displacement of the central windrow formed by the two front raking assemblies.

The present invention will now be described with reference to the annexed drawings, which illustrate a non-limiting example of embodiment thereof, and in which:
Figure 1 is a perspective view three quarters from above of a side-delivery rake according to one embodiment of the present invention, in a first working configuration;
Figure 2 is a perspective view three quarters from above of the side-delivery rake of Figure 1, in a second working configuration;
Figure 3 is a perspective view three quarters from above of the side-delivery rake of Figure 1, in a third working configuration;
Figure 4 is a perspective view three quarters from above of the side-delivery rake of Figure 1, in a fourth working configuration;

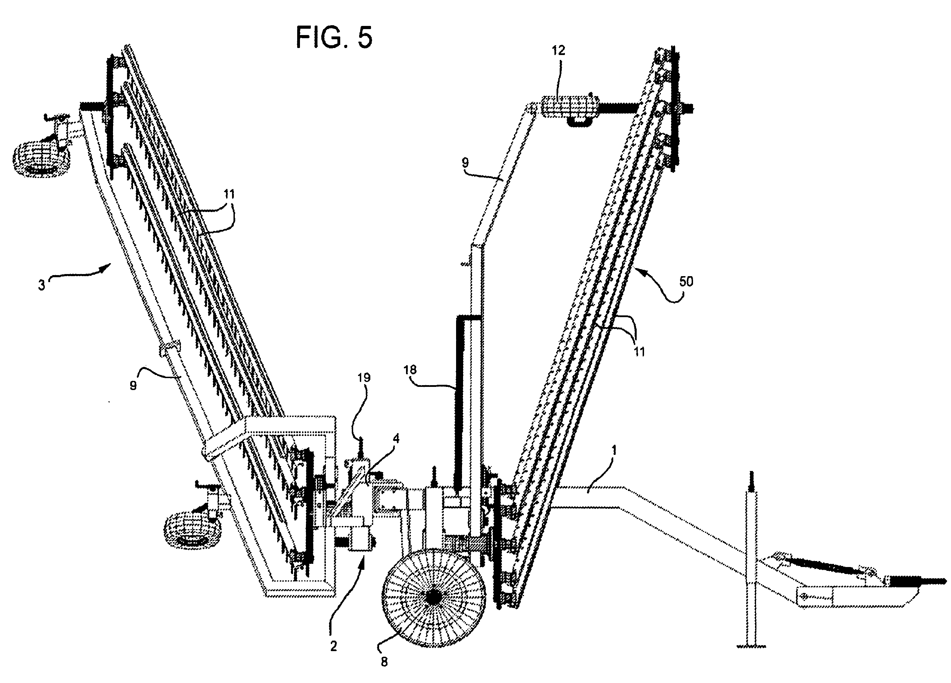

Figure 5 is a side view of the side-delivery rake of Figure 1, in a configuration for transportation on the road;
Figure 6 is a top plan view of the side-delivery rake of

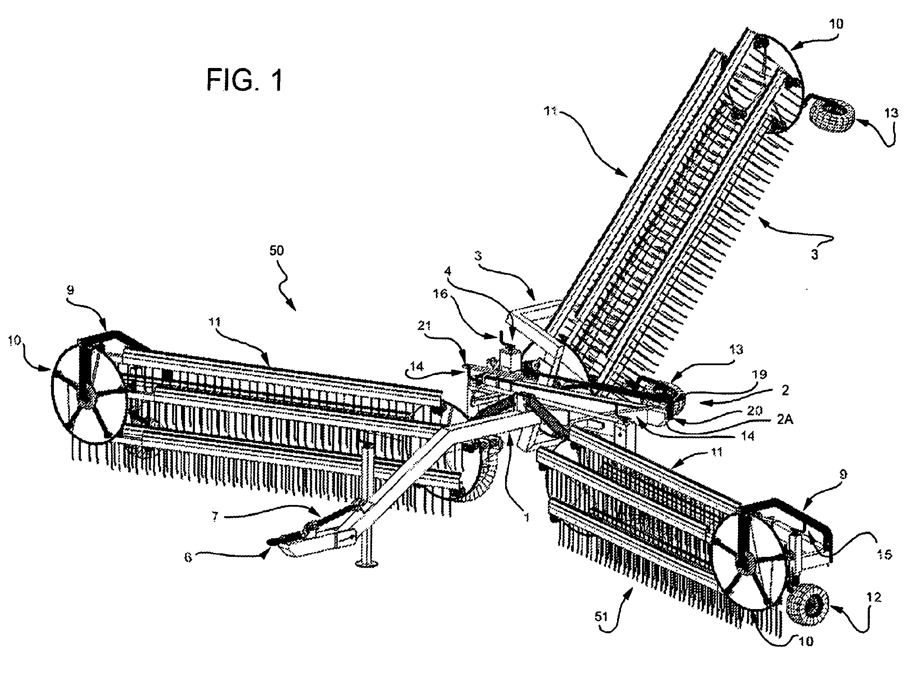

Figure 1, in the first working configuration;

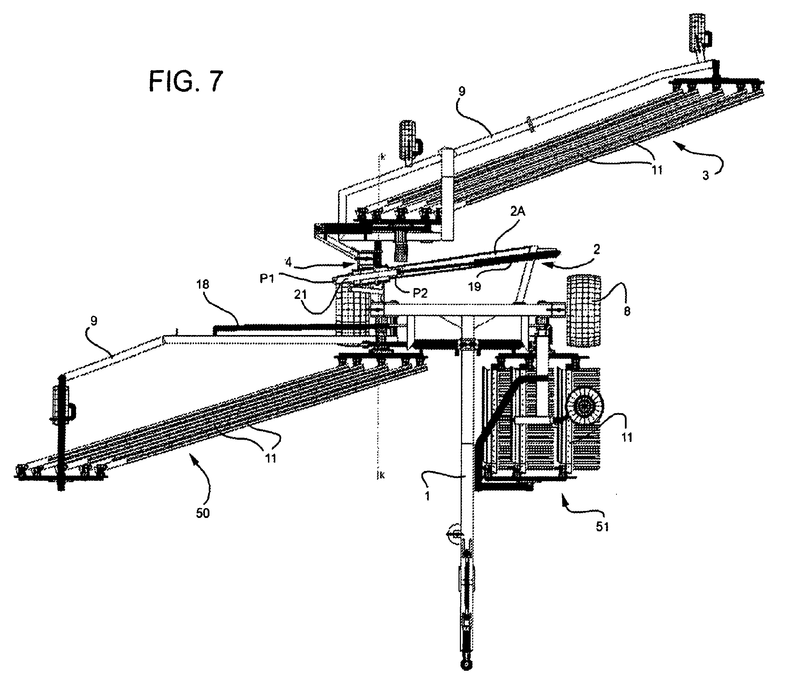

Figure 7 is a top plan view of the side-delivery rake of
Figure 1, in the second working configuration;

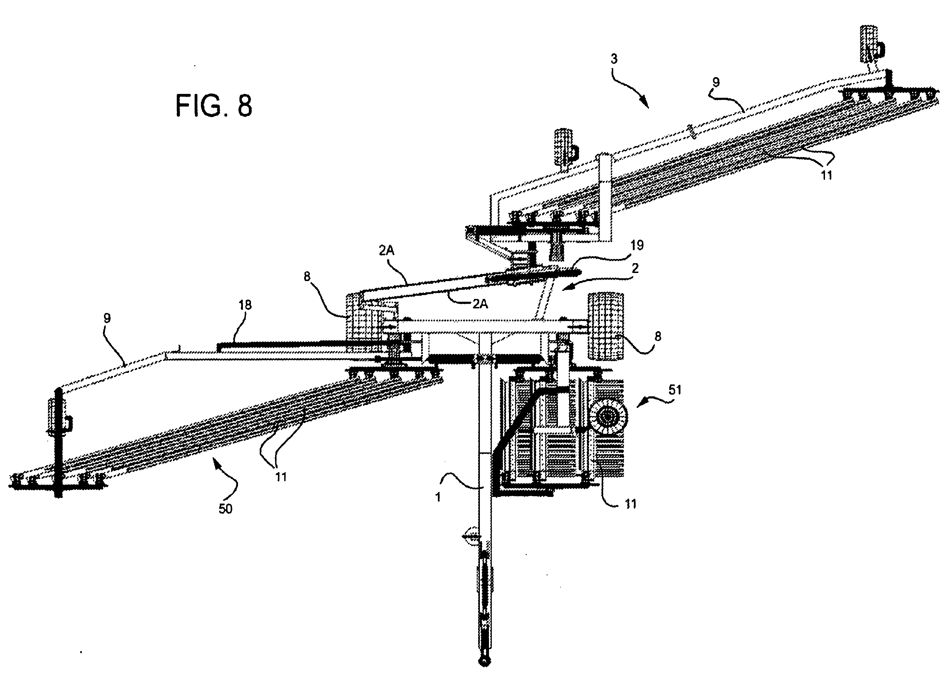

Figure 8 is a top plan view of the side-delivery rake of
Figure 1, in the third working configuration;

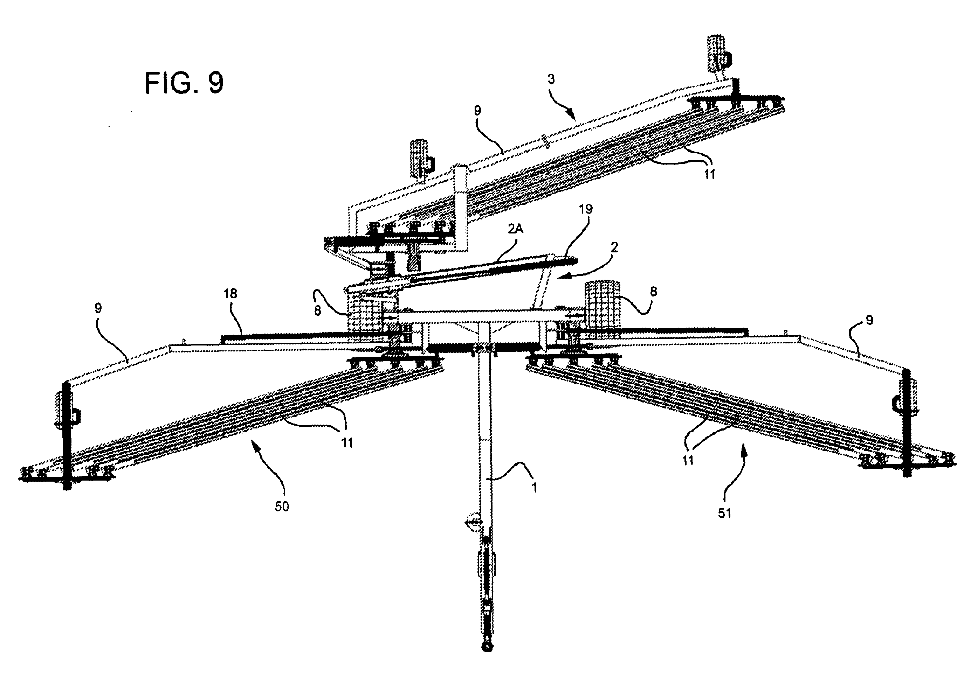

Figure 9 is a top plan view of the side-delivery rake of
Figure 1, in the fourth working configuration;

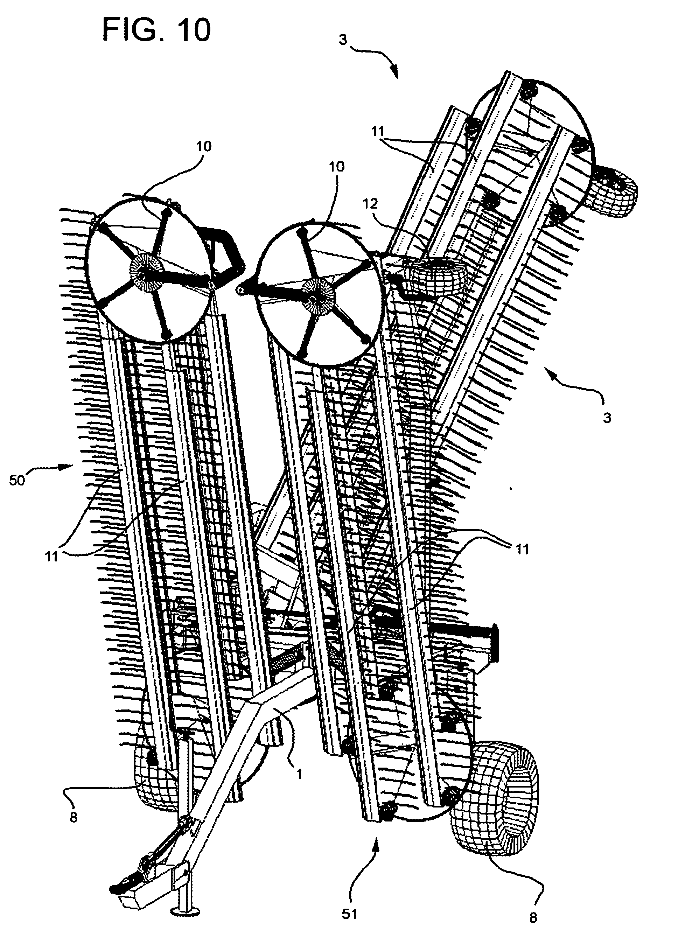

Figure 10 is a perspective view three quarters from above of the side-delivery rake of Figure 1, in a configuration for transportation on the road;

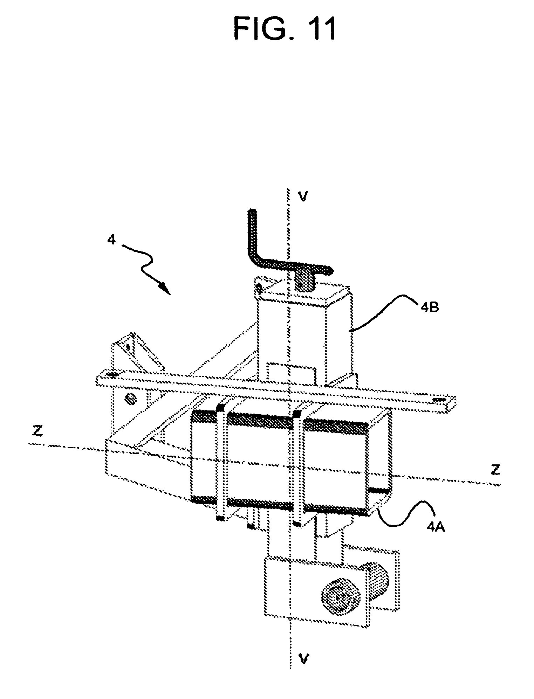

Figure 11 shows an enlarged detail of the side-delivery rake of Figure 1;

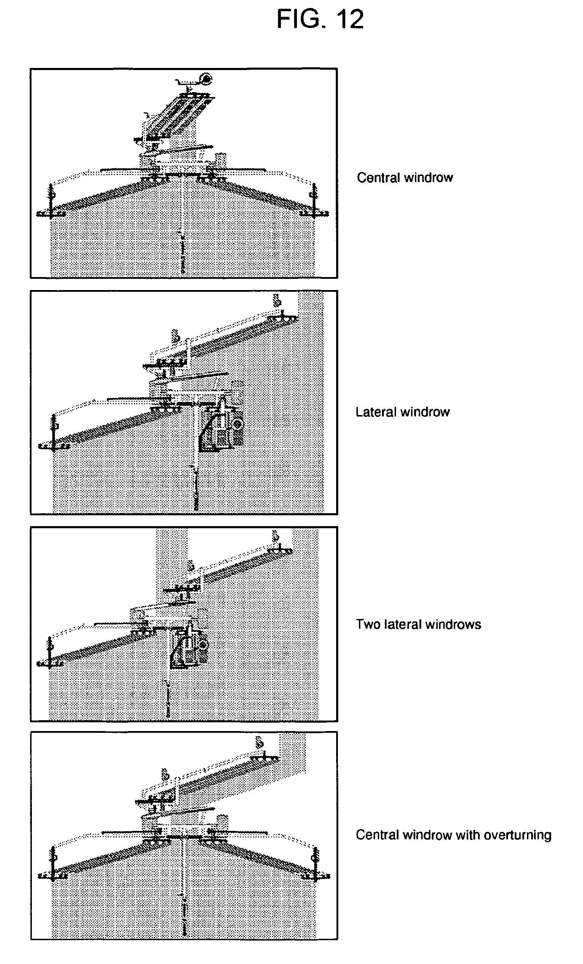

Figure 12 is a schematic illustration of the side-delivery rake of Figure 1 in use, in the various working configurations; and

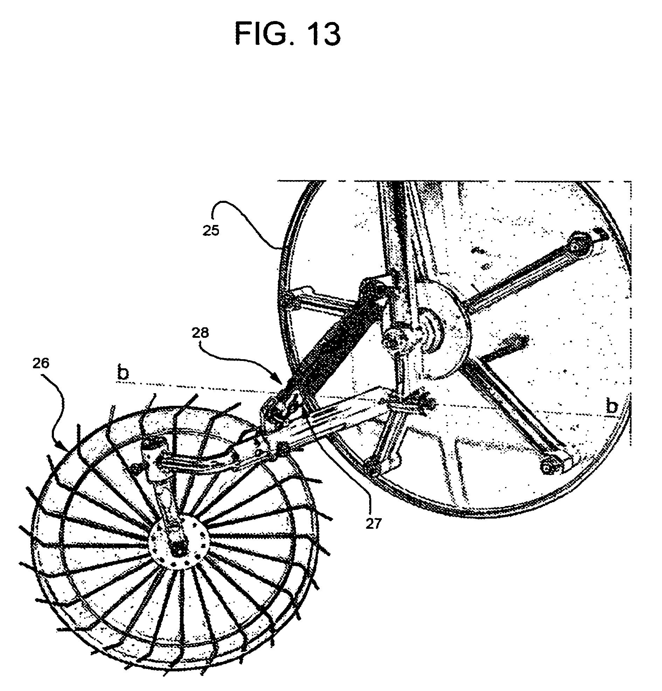

Figure 13 shows a further enlarged detail of the side-delivery rake of Figure 1.

With reference to the figures listed above the side-delivery rake according to the present invention is made up of a sturdy T-shaped main frame 1 with a rear appendage constrained to the main frame 1 by a sturdy rear frame 2, positioned at the same height as the horizontal part of the main frame, inclined with respect thereto so that its right end is in front of the left end and in turn constrained to the rear part of the main frame 1 in two distinct points. Along a horizontal cross member 2A of the rear frame 2, a rear raking assembly 3 is traslatable by hydraulic actuation. The connection between the rear part of the main frame 1 and the rear raking assembly 3 is provided via a purposely designed double connection 4 (Figure 11), comprising a front part 4A arranged horizontally (which slides on the cross member 2A of the rear frame 2) and a vertical rear part 4B, which are fixed to one another. Constrained to the vertical rear part of the double connection 4 with a vertical-screw system 5 is the rear raking assembly 3, the height of which with respect to the ground is therefore adjustable through this screw system 5. In the bottom area of the vertical part 4B of the double connection 4 four or more adjustment screws with horizontal axis are present, which are designed to prevent onset of play caused by possible relative rotation between the vertical part of this double connection 4 and the threaded internal block that enables internal connection between the two parts.

Positioned within the horizontal part 4A of the double connection 4 is synthetic material with high mechanical strength, which covers the four internal sides and favours sliding of the double connection 4 on the horizontal cross member 2A of the rear frame 2. The innerside of this synthetic material is appropriately grooved to favour distribution of lubricant product over these surfaces. The top side of these plates of synthetic material is shaped so as to enable positioning of a thin metal sheet, which is hence arranged between the synthetic material and the inner surface of the horizontal part of the double connection 4. Acting on this metal sheet are a number of adjustment screws, the heads of which are positioned on the outside of the outer surface of the horizontal part of the double connection 4; by acting on these, it is possible to recover any possible play that is created following upon wear of the synthetic material. The plates of synthetic material are constrained in regard to possible relative horizontal movements via two outer frames screwed to the sides of the horizontal part of the double connection 4.

A tow coupling 6 is arranged at the front end of the T-shaped main frame 1, can swivel and is adjustable in height by a threaded tie-rod 7 to enable easy hitching of the side-delivery rake to any tractor.

Mounted to the rear end of the main frame 1 are two wheels 8 with wide tread, adjustable in height with a screw, which maintain the stability of the side-delivery rake as it moves. Two raking assemblies 50, 51 are hinged to the main frame 1 in a front position with respect to the central wheels 8, specularly with respect to the direction of advance (one on the right and one on the left), and comprise each a frame 9 oscillating about the axis of the hinge (right-hand hinge: axis X-X; left-hand hinge: axis Y-Y), mounted on which are two spiders 10, connected to one another by four or more combs 11. Two swivel wheels 12 are fixed to the outer end of the oscillating frame 9, one for each raking assembly 50, 51, both of which are adjustable in height with a screw system 15.

The third raking assembly 3 is hinged at the rear to the sliding double connection 4 and has the same characteristics as the two front ones, except in that it is equipped with two swivel wheels 13, adjustable in height with a screw system 17. The raking assembly 3 can be translated hydraulically from the right-hand end to the left-hand end of the cross member 2A of the rear frame 2, and vice versa, with respect to the sliding double connection 4.

Thanks to the oscillating connection of the three raking assemblies 3, 50, 51 (provided, for the front assemblies 50, 51, by a purposely designed slot having an oval shape and internal dimensions greater than those of a connection pin fixed with respect to the oscillating frame 9 of the respective raking assembly 50, 51, set at the end of the stem of the oleodynamic cylinder; and provided, for the rear raking assembly 3, by a purposely designed oval slot, which has dimensions larger than those of the connection pin fixed with respect to the end of the stem of the oleodynamic cylinder and is made in the plate of the oscillating frame 9 of the rear raking assembly 3), three mutually independent working planes are created, one for each of the raking assemblies 3, 50, 51, so as to enable adaptation to the irregularities of the terrain and operation on terrains with variable and non-uniform inclination, given that the wheels 8, 12, 13 are positioned so as to be very close to the respective raking assemblies 3, 50, 51. The wheels 8, 12, 13 are moreover adjustable in height in a millimetric way by appropriate cranks (14 on the central frame - 15 on the front assemblies - 16 on the double connection - 17 on the rear assembly). In addition, each of the three raking assemblies 3, 50, 51 is connected to the main frame 1 by appropriate lightening springs 18 so as to limit the amount of weight that acts on each wheel and optimize operation of the machine, guaranteeing a longer service life thereof and reducing its wear.

In practice, this side-delivery rake with three raking assemblies, referred to for simplicity hereinafter as "four-function side-delivery rake" (since it is able to carry out four different types of work), has two raking assemblies 50, 51 in front of the two central wheels 8, one of which extends from the right-hand hinge (axis X-X) towards the right-hand front side, and the other extends from the left hinge (axis Y-Y) towards the left-hand front side. The rear raking assembly 3, positioned at the back of the central wheels 8, extends from the rear hinge (axis K-K) towards the left-hand side. The hinge of the rear raking assembly 3 can translate according to the horizontal axis Z-Z, enabling displacement of the rear raking assembly 3 from the right-hand end to the left-hand end of the cross member 2A of the rear frame 2, and vice versa.

The horizontal displacement of the rear raking assembly 3 is controlled by a purposely designed oleodynamic cylinder 19, positioned at the top with respect to the horizontal cross member 2A of the rear frame 2, to which it is constrained in a fixed way on the left-hand side by means of a purposely provided pin 20. The other end of the oleodynamic cylinder 19 is connected to the horizontal front part 4A of the sliding double connection 4. Said constraint can be provided in different positions so as to enable the oleodynamic cylinder 19, which has a stroke of 60 cm, to displace the rear part of the frame by 120 cm or more: in fact, connected to the top of the horizontal front part 4A of the sliding double connection 4 is a bar 21, which has two or more holes (of which at least one at the right-hand end and one at the left-hand end), the centres of which are at a distance from one another of 60 cm and 30 cm each from the middle of the sliding double connection 4. Let P1 be the position of the hole set at the right-hand end of the bar 21, and P2 the position of the hole at the left-hand end. With the cylinder 19 completely open and the connection between the cylinder and the bar 21 in the position P2, the rear raking assembly 3 is positioned at the right-hand end. In order to bring the rear raking assembly 3 into the left-hand position, the distributor that controls the oleodynamic cylinder 19 is operated on, thus causing closing of the stem, the quick-release pin that joins the stem of the cylinder to the hole P2 of the bar 21 with two holes is released, the oleodynamic cylinder 19 is operated so as to extract the stem thereof, via the quick-release pin 22 the terminal part of the stem is connected to the hole P1 of the horizontal bar 21, and the stem of the oleodynamic cylinder 19 is closed again so as to bring the rear raking assembly 3 to the left-hand end of the rear frame 2.

Operation of the four-function side-delivery rake according to the present invention is very simple.

It is driven directly from the driving seat of the tractor by a purposely provided remote control that acts on an electronic control unit for actuating a system of solenoid valves which in turn govern the oleodynamic circuit of the side-delivery rake. The oleodynamic circuit of the side-delivery rake can be connected to that of the tractor by quick-release means, or else be partially or completely separate therefrom, i.e., connected to a tank containing the necessary oil and provided with a circulation pump to be fitted to the power takeoff of the tractor.

The oleodynamic circuit comprises three oleodynamic motors 23 that drive in rotation the spiders 10 and the six cylinders. In particular, three cylinders 22 lift the raking assemblies 3, 50, 51, reducing the width of the side-delivery rake so that it can be transported on road, as illustrated in Figure 10. The fourth cylinder 19 enables lateral translation of the rear assembly from one end to the other of the rear frame 2. The other two cylinders are positioned within the vertical parts of the T-shaped main frame 1 and have the function of lifting rapidly the entire side-delivery rake to prevent contact of the teeth and of the spiders with the ground both during the operations of manoeuvre when working on the land and during transportation. Then, an oleodynamic cylinder 19 is positioned above the horizontal cross member 2A of the rear frame 2 and has the purpose of performing the translation of the rear raking assembly 3; it is actuated by an oleodynamic distributor positioned on the right-hand side of the main frame and connected by purposely provided oleodynamic pipes to the distributors of the tractor.

The front raking assemblies 50, 51 of the four-function side-delivery rake are pre-arranged for application of a further two removable gathering systems 26 in the form of free wheels, which draw their own rotary motion (which enables displacement of the fodder) from friction with the ground. These tined wheels are hinged along the axis of pitch (b-b) and, with the aid of a tension spring 27, present a minimal contact with the ground and hence adapt perfectly to its roughness.

It is moreover possible to adjust the position of the free wheels about to the axis of yaw with a screw system 28. These free wheels are positioned in front of outer disks 25 of the two front raking assemblies as prolongation of the oscillating arm that supports the disks themselves and enable increase up to one metre of the working width of the side-delivery rake.

The inclination of all the tines with respect to the vertical plane is obtained by regulating a tie-rod 7 positioned on the front drawbar for connection between the side-delivery rake and the tractor.

The movement of rotation of the tined reels occurs by means of orbital hydraulic motors 23. This enables reversal of rotation thereof so that the combs, instead of displacing the fodder from outside towards the centre of the side-delivery rake to form a windrow, displace it from the centre outwards spreading it over the ground, opening up the windrow and facilitating drying of the fodder during the daytime hours.

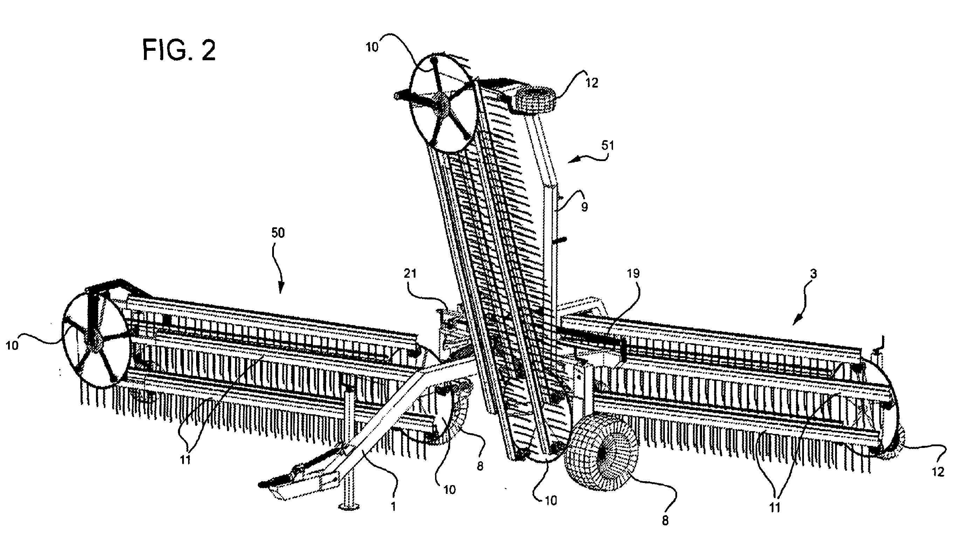

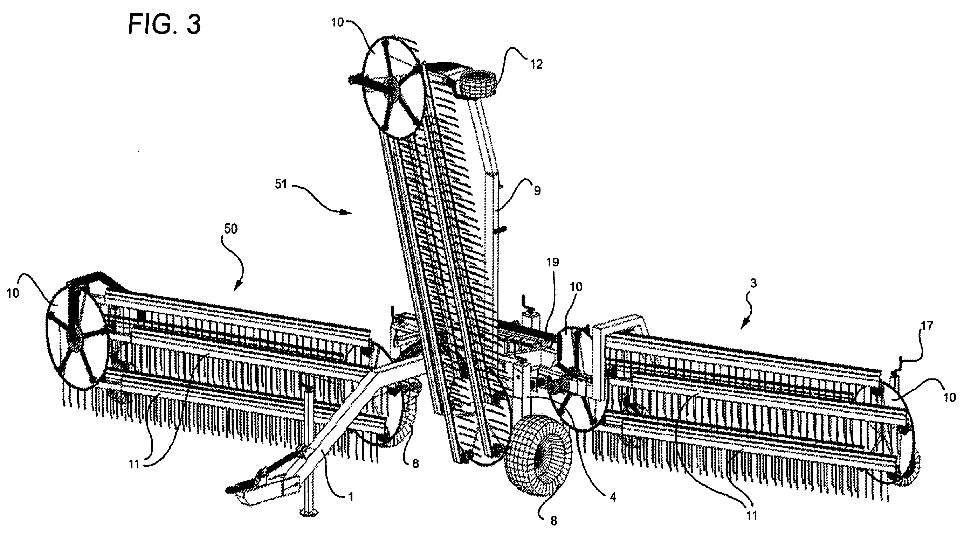

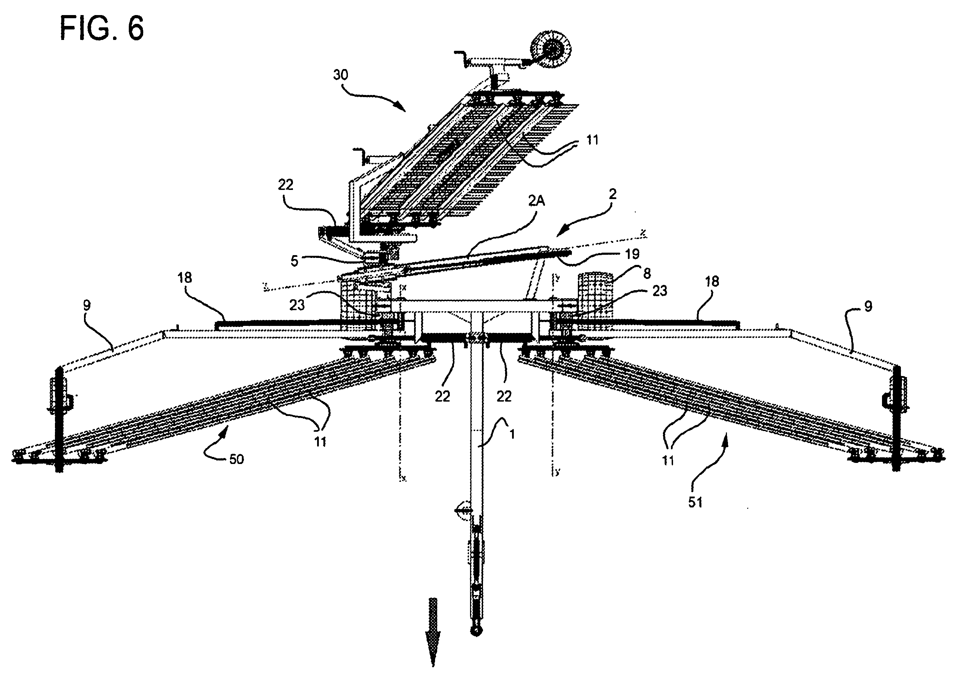

The four-function side-delivery rake is able to carry out four distinct operations, according to the requirements of harvesting of the fodder, which are described below.
1. FORMATION OF THE CENTRAL WINDROW (Figures 1 and 6) With the side-delivery rake in this configuration only the two front raking assemblies are operative. The right-hand raking assembly displaces the fodder from the right-hand side to the centre, and the left-hand raking assembly displaces it from the left-hand side to the centre. As the four-function side-delivery rake advances, a finished central windrow is formed, ready for being gathered. If it is desired to use the four-function side-delivery rake in this configuration, the rear raking assembly can remain in the vertical position set on the right-hand side or left-hand side or else be released from the side-delivery rake.
2. FORMATION OF A LATERAL WINDROW (Figures 2 and 7) With the side-delivery rake in this configuration only the right-hand front raking assembly and the rear raking assembly positioned at the right-hand end of the main frame are operative. The right-hand front raking assembly displaces the fodder from the right-hand side to the centre where it is taken up by the rear raking assembly, which displaces it onto the left-hand side of the side-delivery rake. As the side-delivery rake advances, a lateral windrow is created on the left, which can be displaced or doubled with a second passage of the side-delivery rake in a direction opposite to the first, or else gathered if the amount of fodder were to be sufficient. If it is desired to use the side-delivery rake in this configuration, the left-hand front raking assembly can remain in a vertical position or else be released from the side-delivery rake.
3. FORMATION OF TWO LATERAL WINDROWS OF SMALL SIZE (Figures 3 and 8) With the side-delivery rake in this configuration, only the right-hand front raking assembly and the rear raking assembly positioned at the left-hand end of the main frame are operative. The right-hand front raking assembly displaces the fodder from the right-hand side to the centre forming a lateral windrow of small size; the rear raking assembly displaces the fodder from the right-hand side to the left-hand side of the side-delivery rake to form a second lateral windrow of small size. As the side-delivery rake advances, two lateral windrows at the left of the raking assemblies are created so as to facilitate the process of drying in the meadow during sunlight hours. As night approaches, it is possible to unite these windrows using the four-function side-delivery rake in the configuration for creating the central windrow in such a way as to obtain a windrow of large size so that the fodder is more protected from the damp of the night-time hours. If it is desired to use the side-delivery rake in this configuration, the left-hand front raking assembly can remain in a vertical position or else be released from the side-delivery rake.

### 4. FORMATION OF THE CENTRAL WINDROW BY TURNING IT OVER AND

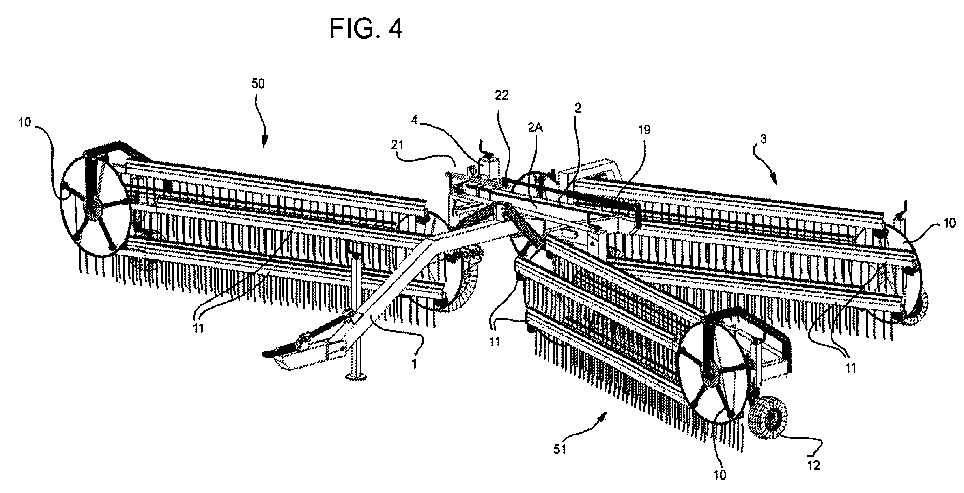

DISPLACING IT (Figures 4 and 9) With the side-delivery rake in this configuration all three raking assemblies work simultaneously. The two front raking assemblies form the central windrow as per point 1, whereas the third raking assembly, i.e., the rear one, positioned in the proximity of the rear right-hand wheel, turns over and displaces the central windrow created by the two front raking assemblies. This enables a more uniform drying of the entire fodder in so far as even that part of fodder that would otherwise remain immobile on the ground, from when it is mowed to when it is gathered, is lifted off the ground.

With the four-function side-delivery rake of the present invention the advantages outlined in what follows are hence obtained.

A first advantage is represented by the high versatility of the side-delivery rake; it can be used for the following operations: a) forming a central windrow, b) forming a lateral windrow, c) forming two lateral windrows of small size, d) turning over and displacing the central windrow, e) strewing-out the windrow according to the requirements of raking of the fodder.

In particular, the four-function side-delivery rake is used in the configuration a) to form the central windrow when the amount of fodder is such as to allow formation of a windrow ready for being swept up by a round baler, or else when it is necessary to put together a number of small windrows or swaths made by a mower/conditioner to form a single large windrow to be swept up by a round baler, or else to put together a number of windrows of small size that have dried during the sunlight hours before twilight so that the fodder absorbs a smaller amount of moisture during night-time hours and will preserve better characteristics.

The four-function side-delivery rake is used in the configuration b) when it is necessary to perform more than one pass (generally a pass in one direction and a return pass) to obtain a windrow of dimensions sufficient for being gathered by the round baler.

The four-function side-delivery rake is used in the configuration c) when it is necessary to obtain windrows of small size so that the fodder can dry as much as possible during hours of sunlight. These small-sized windrows will then be brought together using the four-function side-delivery rake in the configuration a) so that windrows of larger size will be formed, which enable a lower exposure to moisture during night-time hours.

The four-function side-delivery rake is used in the configuration d) when it is necessary to gather the fodder into a central windrow and then turn it over immediately after and displace it laterally so as to lift off the ground also that part of fodder that, lying in the central aisle between the two front raking assemblies, would otherwise present a degree of humidity different from that of the fodder on the surface and would remain in the same place from when it is mowed to when it is swept up by the baler.

The four-function side-delivery rake is used in the configuration e) when it is necessary open up and spread out the windrow, that is not yet completely dry, to facilitate the drying process.

A second advantage of the side-delivery rake is represented by the high working capacity, since it guarantees a considerable breath of gathering, which may be, if necessary, increased further with application of two removable free wheels that can be applied at the ends of the front raking assemblies.

A third advantage of the side-delivery rake is represented by the high rate of advance and by the possibility of adaptation to rough terrain thanks to the presence of swivel wheels positioned very close to the raking assemblies.

A fourth advantage is represented by the fact that the combs of the raking assemblies penetrate vertically into the fodder and displace it horizontally over the clod and withdraw grazing the ground gently following an epicyclic movement, thus ensuring absolute cleanness of the fodder from soil or stones and, in the case of lucerne, keeping the smaller leaves and the stems rendered brittle by drying intact.

A fifth advantage is represented by the fact that, since the equipment is drawn along, albeit of large size, it can be used with tractors with small engine displacement enabling reduced fuel consumption, low atmospheric pollution, maximum care for the fodder and for the land.

A sixth advantage is represented by the fact that, since it is possible to carry out hydraulic closing of the raking assemblies, it is possible to move around easily on the road in full respect for the rules of the highway code as well as to manoeuvre along narrow stretches or where access is difficult.

## Claims

1. A multifunction side-delivery rake, **characterized in that** it is able to carry out four distinct operations of raking, namely: formation of a central windrow, formation of a central windrow with subsequent overturning and lateral displacement thereof, formation of a single lateral windrow of large size, and formation of two distinct lateral windrows of small size, in addition to the operation of tedding of the windrow.

2. The side-delivery rake according to Claim 1, **characterized in that** it has a main frame (1) carried by wheels (8), connected to which are a first raking assembly (50), a second raking assembly (51), and a third raking assembly (3), provided with respective combs (11) for formation of central or lateral windrows; the first and second raking assemblies (50, 51) being arranged at the front of the main frame (1) to form of a central windrow; the third raking assembly (3) being set at the rear of the main frame (1) and translatable laterally in a plane parallel to that of the ground and being designed to be used simultaneously with one of the first and second raking assemblies (50, 51) or with both of them to enable, according to its position, formation of a lateral windrow, of two lateral windrows of small size, or overturning and displacement of the central windrow formed by the first and second raking assemblies (50, 51).

3. The side-delivery rake according to Claim 2, **characterized in that** the main frame (1) is T-shaped and **in that** it comprises a rear appendage constrained to the main frame (1) via a rear frame (2), which is positioned at the same height as a horizontal part of the main frame (1), comprises a horizontal cross member (2A), set oblique with respect to the main frame (1), so that a first end of the cross member (2A) is in front of a second end opposite thereto, and is in turn constrained to a rear part of the main frame (1) in two distinct points; the third raking assembly (3) being translatable along the horizontal cross member (2A) of the rear frame (2).

4. The side-delivery rake according to Claim 3, **characterized in that** it comprises an oleodynamic cylinder (19) for translating the third raking assembly (3) along the cross member (2A) of the rear frame (2) and **in that** the rear part of the main frame (1) is connected to the third raking assembly (3) via a double connection (4) comprising a first portion (4A), set horizontal and sliding on the cross member (2A) of the rear frame (2), and a second, vertical, portion (4B) fixed to the first portion (4A).

5. The side-delivery rake according to Claim 4, **characterized in that** the third raking assembly (3) is constrained to the second, vertical, portion (4B) of the double connection (4) with a vertical-screw system so that a height from the ground of the third raking assembly (3) is adjustable by the screw system.

6. The side-delivery rake according to Claim 4 or 5, **characterized in that** the first and second raking assemblies (50, 51) are hinged to the frame, in a front position with respect to the wheels (8), in a way specular with respect to the direction of advance, respectively on the right and on the left; the first and second raking assemblies (50, 51) each comprising a frame (9) oscillating about a respective hinge axis (X-X, Y-Y), two spiders (10), mounted on the respective oscillating frame (9) and connected to one another by at least four combs (11), and swivel wheels (12), fixed to outer ends of the respective oscillating frames (9) and adjustable in height with screw means; and **in that** the third raking assembly (3) is hinged at the rear of the sliding double connection (4).

7. The side-delivery rake according to Claim 6, **characterized in that**, thanks to the oscillating connection (9) of the first, second, and third raking assemblies (50, 51, 3), three independent working planes are created, one for each of the raking assemblies (50, 51, 3) so as to enable adaptation to the irregularities of the terrain and working on terrains with variable and non-uniform inclination, the wheels being positioned so as to be close to the raking assemblies (50, 51, 3) and being moreover adjustable in height in a millimetric way by purposely provided cranks; and **in that**, for the first and second raking assemblies (50, 51), the oscillating connection is obtained by slots having an oval shape and internal dimensions greater than those of pins for connection with the oscillating frame (9) of the respective one between the first raking assembly (50) and the second raking assembly (51), the slots being set at ends of stems of further oleodynamic cylinders (18) of the first and second raking assemblies (50, 51); and, for the third raking assembly (3), the oscillating connection is obtained by a further oval slot made in a plate of the oscillating frame (9) of the third raking assembly (3) and having dimensions greater than those of the connection pin fixed with respect to the end of the stem of the oleodynamic cylinder (19).

8. The side-delivery rake according to Claim 6 or 7, **characterized in that** each of the first, second, and third raking assemblies is connected to the main frame by lightening springs so as to limit the amount of weight that acts on each of the outer wheels.

9. The side-delivery rake according to any one of Claims 6 to 8, **characterized in that** the oleodynamic cylinder (19) is positioned above the horizontal cross member (2A) of the rear frame (2) and has an end constrained in a fixed way to the horizontal cross member (2A) of the rear frame (2) by a pin; an opposite end of the oleodynamic cylinder (19) being connected to the horizontal part (4A) of the sliding double connection (4) so as to enable the oleodynamic cylinder (19) to displace the rear part of the frame by a distance greater than that of its own stroke by a bar (21) connected at the top to the horizontal part (4A) of the sliding double connection (4) and having at least two opposite end holes to which the end of the stem of the oleodynamic cylinder (19) can be connected.

10. The side-delivery rake according to any one of Claims 6 to 9, **characterized in that** the first and second raking assemblies (50, 51) are pre-arranged for application of a further two removable gathering systems having the shape of tined free wheels that draw their rotary motion which enables displacement of the fodder from friction with the ground; the tined wheels being hinged along an axis of pitch and being positioned in front of outer disks of the first and second raking assemblies as prolongation of the oscillating frame by which the disks are carried; a position of the free wheels being adjustable about an axis of yaw with a screw system.

11. The side-delivery rake according to any one of Claims 6 to 10, **characterized in that** it comprises orbital hydraulic motors coupled to the spiders (10) in such a way that the rotation of the spiders (10) is reversible.

12. The side-delivery rake according to any one of Claims 6 to 11, **characterized in that**, when the side-delivery rake is configured for formation of a central windrow, the first and second raking assemblies (50, 51) are operative and horizontal, whereas the third raking assembly (3) is kept raised in a substantially vertical position, on the right-hand end or on the left-hand end of the rear frame (2); when the side-delivery rake is configured for formation of a single lateral windrow, the first raking assembly (50) and the third raking assembly (3) are operative and horizontal, with the third raking assembly (3) positioned on the right-hand side of the rear frame (2), whereas the second raking assembly (51) is kept raised in a substantially vertical position; when the side-delivery rake is configured for formation of two lateral windrows of small size, the first raking assembly (50) and the third raking assembly (3) are operative and horizontal, with the third raking assembly (3) positioned on the left-hand side of the rear frame (2), whereas the second raking assembly (51) is kept raised in a substantially vertical position; when the side-delivery rake is configured for formation of a central windrow with subsequent overturning and displacement thereof, the first, second, and third raking assemblies (50, 51, 3) are operative and horizontal, with the third raking assembly (3) positioned at the right-hand end of the rear frame (2); when only two of the three raking assemblies (50, 51, 3) are operative and horizontal, the remaining raking assembly being disconnected from the side-delivery rake.

## Patentansprüche

1. Multifunktionsseitenausgabe- bzw. -ablageschwader, **dadurch gekennzeichnet, dass** er fähig ist, vier verschiedene Schwadoperationen durchzuführen, nämlich: Bildung einer zentralen Schwade, Bildung einer zentralen Schwade mit anschließendem Umdrehen und lateraler Verlagerung davon, Bildung einer einzelnen bzw. einzigen lateralen Schwade von großer Größe und Bildung von zwei unterschiedlichen bzw. getrennten lateralen Schwaden von kleiner Größe, zusätzlich zu der Operation des Wendens der Schwade.

2. Seitenausgabeschwader nach Anspruch 1, **dadurch gekennzeichnet, dass** er einen Hauptrahmen (1) aufweist, der durch Räder (8) getragen ist, mit dem eine erste Schwadanordnung (50), eine zweite Schwadanordnung (51) und eine dritte Schwadanordnung (3) verbunden sind, die mit jeweiligen Kämmen (11) zur Bildung von zentralen oder lateralen Schwaden versehen sind; wobei die erste und die zweite Schwadanordnung (50, 51) an der Vorderseite bzw. dem vorderen Teil des Hauptrahmens (1) angeordnet sind, um eine zentrale Schwade zu bilden; wobei die dritte Schwadanordnung (3) an der Rückseite bzw. dem vorderen Teil des Hauptrahmens (1) festgelegt ist und lateral in einer Ebene parallel zu derjenigen des Bodens bewegbar ist und ausgelegt ist, simultan mit einer der ersten und zweiten Schwadanordnungen (50, 51) oder mit beiden von ihnen verwendet zu werden, um gemäß ihrer Position die Bildung einer lateralen Schwade, zwei lateraler Schwaden von kleiner Größe oder ein Umdrehen und Verlagern der zentralen Schwade zu ermöglichen, die durch die erste und die zweite Schwadanordnung (50, 51) gebildet wird.

3. Seitenausgabeschwader nach Anspruch 2, **dadurch gekennzeichnet, dass** der Hauptrahmen (1) T-förmig ist und dass er einen hinteren Anhang bzw. Fortsatz umfasst, der an den Hauptrahmen (1) über einen hinteren Rahmen (2) gedrängt bzw. gespannt ist, der auf dergleichen Höhe wie ein horizontaler Teil des Hauptrahmens (1) positioniert ist, ein horizontales Querglied (2A) umfasst, das schräg bezüglich des Hauptrahmens (1) festgelegt ist, so dass ein erstes Ende des Querglieds (2A) vor einem zweiten Ende gegenüberliegend bzw. entgegensetzt dazu ist, und wiederum an einen hinteren Teil des Hauptrahmens (1) an zwei unterschiedlichen bzw. getrennten Punkten gedrängt bzw. gespannt ist; wobei die dritte Schwadanordnung (3) entlang dem horizontalen Querglied (2A) des hinteren Rahmens (2) translatorisch bewegbar ist.

4. Seitenausgabeschwader nach Anspruch 3, **dadurch gekennzeichnet, dass** er einen oleo- bzw. öldynamischen Zylinder (19) zum translatorischen Bewegen der dritten Schwadanordnung (3) entlang des Querglieds (2A) des hinteren Rahmens (2) umfasst und dass der hintere Teil des Hauptrahmens (1) mit der dritten Schwadanordnung (3) über eine Doppelverbindung (4) verbunden ist, die einen ersten Abschnitt (4A), der horizontal festgelegt ist und an bzw. auf dem Querglied (2A) des hinteren Rahmens (2) gleitet, und einen zweiten, vertikalen Abschnitt (4B) umfasst, der an dem ersten Abschnitt (4A) fixiert bzw. befestigt ist.

5. Seitenausgabeschwader nach Anspruch 4, **dadurch gekennzeichnet, dass** die dritte Schwadanordnung (3) an den zweiten, vertikalen Abschnitt (4B) der Doppelverbindung (4) mit einem Vertikalschraubsystem gedrängt bzw. gespannt ist, so dass eine Höhe vom Boden der dritten Schwadanordnung (3) durch das Schraubsystem einstellbar bzw. anpassbar ist.

6. Seitenausgabeschwader nach Anspruch 4 oder 5, **dadurch gekennzeichnet, dass** die erste und die zweite Schwadanordnung (50, 51) an dem Rahmen angelenkt sind, und zwar in einer vorderen Position bezüglich der Räder (8) auf eine Weise spiegelnd zu der Vorschub- bzw. Vorrückrichtung, jeweils auf der rechten und auf der linken Seite; wobei die erste und die zweite Schwadanordnung (50, 51) jede einen Rahmen (9), der um eine jeweilige Gelenk- bzw. Scharnierachse (X-X, Y-Y) schwingt, zwei Radsterne bzw. Speichenkreuze (10), die an bzw. auf dem jeweiligen Schwingrahmen (9) montiert sind und mit einander durch zumindest vier Kämme (11) verbunden sind, und Schwenkräder (12) umfasst, die an äußeren Enden der jeweiligen Schwingrahmen (9) fixiert bzw. befestigt sind und mit Schraubmitteln in der Höhe einstellbar bzw. anpassbar sind; und dadurch, dass die dritte Schwadanordnung (3) an der Rückseite bzw. dem hinteren Teil der gleitenden Doppelverbindung (4) angelenkt ist.

7. Seitenausgabeschwader nach Anspruch 6, **dadurch gekennzeichnet, dass** dank der Schwingverbindung (9) der ersten, zweiten und dritten Schwadanordnung (50, 51, 3) drei unabhängige Arbeitsebenen geschaffen sind, eine für jede der Schwadanordnungen (50, 51, 3), um eine Anpassung an die Unregelmäßigen des Geländes und Arbeiten auf Geländen mit variabler und nicht einheitlicher Neigung zu ermöglichen, wobei die Räder so positioniert sind, dass sie nahe an den Schwadanordnungen (50, 51, 3) sind und ferner in der Höhe millimeterweise bzw. millimetergenau durch absichtlich bzw. zweckmäßigerweise vorgesehene Kurbeln einstellbar bzw. anpassbar sind; und dadurch, dass für die erste und die zweite Schwadanordnung (50, 51) die Schwingverbindung durch Schlitze mit ovaler Form und internen Abmessungen erhalten wird, die größer sind als diese von Stiften zur Verbindung mit dem Schwingrahmen (9) der bzw. des jeweiligen zwischen der ersten Schwadanordnung (50) und der zweiten Schwadanordnung (51), wobei die Schlitze an Enden von Stangen bzw. Schäften weiterer oleo- bzw. öldynamischer Zylinder (18) der ersten und der zweiten Schwadanordnung (50, 51) festgelegt sind; und für die dritte Schwadanordnung (3) die Schwingverbindung durch einen weiteren ovalen Schlitz erhalten wird, der in einer Platte des Schwingrahmens (9) der dritten Schwadanordnung (3) gemacht ist und Abmessungen aufweist, die größer sind als diese des Verbindungsstifts, der bezüglich des Endes des Schafts bzw. der Stange des oleo- bzw. öldynamischen Zylinders (19) fixiert bzw. befestigt ist.

8. Seitenausgabeschwader nach Anspruch 6 oder 7, **dadurch gekennzeichnet, dass** jede der ersten, zweiten und dritten Schwadanordnung mit dem Hauptrahmen durch Entlastungs- bzw. Erleichterungsfedern verbunden ist, um den Gewichtsbetrag zu begrenzen, der auf jedes der äußeren Räder wirkt.

9. Seitenausgabeschwader nach Anspruch 6 bis 8, **dadurch gekennzeichnet, dass** der oleodynamische Zylinder (19) über dem horizontalen Querglied (2A) des hinteren Rahmens (2) positioniert ist und ein Ende aufweist, das an dem horizontalen Querglied (2A) des hinteren Rahmens (2) auf eine fixierte bzw. befestige Weise durch einen Stift gedrängt bzw. gespannt ist; wobei ein gegenüberliegendes bzw. entgegengesetztes Ende des oleodynamischen Zylinders (19) mit dem horizontalen Teil (4A) der gleitenden Doppelverbindung (4) verbunden ist, um den oleodynamischen Zylinder (19) zu befähigen, den hinteren Teil des Rahmens um einen Abstand zu verlagern, der größer ist als derjenige seines eigenen Hubs durch eine Stange (21), die an der Oberseite bzw. dem oberen Teil mit dem horitzontalen Teil (4A) der gleitenden Doppelverbindung (4) verbunden ist und zumindest zwei gegenüberliegende bzw. entgegensetzte Endlöcher aufweist, mit denen das Ende des Schafts des oleodynamischen Zyinders (19) verbunden werden kann.

10. Seitenausgabeschwader nach einem der Ansprüche 6 bis 9, **dadurch gekennzeichnet, dass** die erste und die zweite Schwadanordnung (50, 51) zur Anwendung bzw. Anbringung weiterer zwei entfernbarer Zusammentrag- bzw. Erntesysteme vorangeordnet sind, welche die Form von zinkigen bzw. mit Zinken bzw. Zacken versehenen freien Rädern aufweisen, die ihre rotatorische Bewegung, die eine Verlagerung des Futters ermöglicht, aus der Reibung mit dem Boden ziehen; wobei die zinkigen Räder entlang einer Quer- bzw. Nickachse angelenkt sind und vor äußeren Scheiben der ersten und der zweiten Schwadanordnung als Verlängerung des Schwingrahmens positioniert sind, durch den die Scheiben getragen sind; wobei eine Position der freien Räder um eine Hoch- bzw. Gierachse mit einem Schraubsystem einstellbar bzw. anpassbar sind.

11. Seitenausgabeschwader nach einem der Ansprüche 6 bis 10, **dadurch gekennzeichnet, dass** er Orbitalhydraulikmotoren umfasst, die mit den Radsternen (10) auf eine solche Weise gekoppelt sind, dass die Rotation der Radsterne (10) reversibel ist.

12. Seitenausgabeschwader nach einem der Ansprüche 6 bis 11, **dadurch gekennzeichnet, dass**, wenn der Seitenausgabeschwader zur Bildung einer zentralen Schwade konfiguriert ist, die erste und die zweite Schwadanordnung (50, 51) operativ und horizontal sind, wohingegen die dritte Schwadanordnung (3) in einer im Wesentlichen vertikalen Position an dem rechten Ende oder an dem linken Ende des hinteren Rahmens (2) erhöht bleibt; wenn der Seitenausgabeschwader zur Bildung einer einzigen bzw. einzelnen lateralen Schwade konfiguriert ist, die erste Schwadanordnung (50) und die dritte Schwadanordnung (3) operativ und horizontal sind, wobei die dritte Schwadanordnung (3) auf der rechten Seite des hinteren Rahmens (2) positioniert ist, wohingegen die zweite Schwadanordnung (51) in einer im Wesentlichen vertikalen Position erhöht bleibt; wenn der Seitenausgabeschwader zur Bildung von zwei lateralen Schwaden von kleiner Größe konfiguriert ist, die erste Schwadanordnung (50) und die dritte Schwadanordnung (3) operativ und horizontal sind, wobei die dritte Schwadanordnung (3) auf der linken Seite des hinteren Rahmens (2) positioniert ist, wohingegen die zweite Schwadanordnung (51) in einer im Wesentlichen vertikalen Position erhöht bleibt; wenn der Seitenausgabeschwader zur Bildung einer zentralen Schwade mit anschließendem Umdrehen und lateraler Verlagerung davon konfiguriert ist, die erste, zweite und dritte Schwadanordnung (50, 51, 3) operativ und horizontal sind, wobei die dritte Schwadanordnung (3) an dem rechten Ende des hinteren Rahmens (2) positioniert ist; wenn nur zwei der drei Schwadanordnungen (50, 51, 3) operativ und horizontal sind, die übrige Schwadanordnung von dem Seitenausgabeschwader getrennt ist.

## Revendications

1. Râteau andaineur multifonction, **caractérisé en ce qu'**il est capable de réaliser quatre opérations distinctes de râtelage, c'est-à-dire la formation d'un andain central, la formation d'un andain central avec son retournement ultérieur et son déplacement latéral, la formation d'un seul andain latéral de grande taille, et la formation de deux andains latéraux distincts de petite taille, en plus de l'opération consistant à faner l'andain.

2. Râteau andaineur selon la revendication 1, **caractérisé en ce qu'**il a un châssis principal (1) supporté par des roues (8) raccordées auxquelles on trouve un premier ensemble de râtelage (50), un deuxième ensemble de râtelage (51) et un troisième ensemble de râtelage (3), dotés de peignes (11) respectifs pour la formation des andains centraux ou latéraux ; les premier et deuxième ensembles de râtelage (50, 51) étant agencés à l'avant du châssis principal (1) afin de former un andain central ; le troisième ensemble de râtelage (3) étant placé à l'arrière du châssis principal (1) et pouvant effectuer un mouvement de translation latéral dans un plan parallèle à celui du sol et étant conçu pour être utilisé simultanément avec l'un des premier et deuxième ensembles de râtelage (50, 51) ou avec les deux pour permettre, selon leur position, la formation d'un andain latéral, de deux andains latéraux de petite taille ou le retournement et le déplacement de l'andain central formé par les premier et deuxième ensembles de râtelage (50, 51).

3. Râteau andaineur selon la revendication 2, **caractérisé en ce que** le châssis principal (1) est en forme de T et **en ce qu'**il comprend un appendice arrière contraint sur le châssis principal (1) via un châssis arrière (2), qui est positionné à la même hauteur qu'une partie horizontale du châssis principal (1), comprend une traverse horizontale (2A) placée de manière oblique par rapport au châssis principal (1), de sorte qu'une première extrémité de la traverse (2A) est en face d'une seconde extrémité opposée à cette dernière, et est à son tour contraint sur une partie arrière du châssis principal (1) en deux points distincts ; le troisième ensemble de râtelage (3) pouvant effectuer un mouvement de translation le long de la traverse horizontale (2A) du châssis arrière (2).

4. Râteau andaineur selon la revendication 3, **caractérisé en ce qu'**il comprend un cylindre oléodynamique (19) pour faire effectuer un mouvement de translation au troisième ensemble de râtelage (3) le long de la traverse (2A) du châssis arrière (2) et **en ce que** la partie arrière du châssis principal (1) est raccordée au troisième ensemble de râtelage (3) via un double raccordement (4) comprenant une première partie (4A) placée horizontalement et coulissant sur la traverse (2A) du châssis arrière (2) et une deuxième partie verticale (4B) fixée sur la première partie (4A).

5. Râteau andaineur selon la revendication 4, **caractérisé en ce que** le troisième ensemble de râtelage (3) est contraint sur la deuxième partie verticale (4B) du double raccordement (4) avec un système de vis verticale de sorte qu'une hauteur du sol du troisième ensemble de râtelage (3) est ajustable par le système de vis.

6. Râteau andaineur selon la revendication 4 ou 5, **caractérisé en ce que** les premier et deuxième ensembles de râtelage (50, 51) sont articulés par rapport au châssis, dans une position avant par rapport aux roues (8), d'une manière spéculaire par rapport à la direction d'avancement, respectivement à droite et à gauche ; les premier et deuxième ensembles de râtelage (50, 51) comprenant chacun un châssis (9) oscillant autour d'un axe d'articulation (X-X, Y-Y) respectif, deux araignées (10) montées sur le châssis oscillant (9) respectif et raccordées entre elles par au moins quatre peignes (11), et des roues à pivot (12) fixées sur les extrémités externes des châssis oscillants (9) respectifs et ajustables en hauteur avec des moyens de vis ; et **en ce que** le troisième ensemble de râtelage (3) est articulé à l'arrière du double raccordement coulissant (4).

7. Râteau andaineur selon la revendication 6, **caractérisé en ce que**, grâce au raccordement oscillant (9) des premier, deuxième et troisième ensembles de râtelage (50, 51, 3), on crée trois plans de travail indépendants, un pour chacun des ensembles de râtelage (50, 51, 3) afin de permettre l'adaptation aux irrégularités du terrain et travailler sur des terrains avec une inclinaison variable et non uniforme, les roues étant positionnées afin d'être à proximité des ensembles de râtelage (50, 51, 3) et étant de plus ajustables en hauteur de manière millimétrale avec des crans prévus à dessein ; et **en ce que**, pour les premier et deuxième ensembles de râtelage (50, 51), le raccordement oscillant est obtenu par des fentes ayant une forme ovale et des dimensions internes supérieures à celles des broches pour le raccordement avec le châssis oscillant (9) de l'ensemble respectif entre le premier ensemble de râtelage (50) et le deuxième ensemble de râtelage (51), les fentes étant placées aux extrémités des tiges des autres cylindres oléodynamiques (18) des premier et deuxième ensembles de râtelage (50, 51) ; et, pour le troisième ensemble de râtelage (3), le raccordement oscillant est obtenu par une autre fente ovale réalisée dans une plaque d'un châssis oscillant (9) du troisième ensemble de râtelage (3) et ayant des dimensions supérieures à celles de la broche de raccordement fixée par rapport à l'extrémité de la tige du cylindre oléodynamique (19).

8. Râteau andaineur selon la revendication 6 ou 7, **caractérisé en ce que** chacun parmi les premier, deuxième et troisième ensembles de râtelage est raccordé au châssis principal par des ressorts d'allègement afin de limiter la quantité de poids qui agit sur chacune des roues externes.

9. Râteau andaineur selon l'une quelconque des revendications 6 à 8, **caractérisé en ce que** le cylindre oléodynamique (19) est positionné au-dessus de la traverse horizontale (2A) du châssis arrière (2) et a une extrémité contrainte de manière fixe sur la traverse horizontale (2A) du châssis arrière (2) via une broche ; une extrémité opposée du cylindre oléodynamique (19) qui est raccordée à la partie horizontale (4A) du double raccordement coulissant (4) afin de permettre au cylindre oléodynamique (19) de déplacer la partie arrière du châssis selon une distance supérieure à celle de sa propre course, grâce à une barre (21) raccordée, au niveau de la partie supérieure, à la partie horizontale (4A) du double raccordement coulissant (4) et ayant au moins deux trous d'extrémité opposés auxquels l'extrémité de la tige du cylindre oléodynamique (19) peut être raccordée.

10. Râteau andaineur selon l'une quelconque des revendications 6 à 9, **caractérisé en ce que** les premier et deuxième ensembles de râtelage (50, 51) sont pré-agencés pour l'application de deux autres systèmes de collecte amovibles ayant la forme de roues libres à griffes qui tirent leur mouvement rotatif, ce qui permet le déplacement du fourrage contre la friction avec le sol ; les roues à griffes étant articulées le long d'un axe de tangage et étant positionnées en face de disques externes des premier et deuxième ensembles de râtelage en tant que prolongement du châssis oscillant avec lequel les disques sont supportés ; une position des roues libres étant ajustable autour d'un axe de lacet avec un système de vis.

11. Râteau andaineur selon l'une quelconque des revendications 6 à 10, **caractérisé en ce qu'**il comprend des moteurs hydrauliques orbitaux couplés aux araignées (10) de sorte que la rotation des araignées (10) est réversible.

12. Râteau andaineur selon l'une quelconque des revendications 6 à 11, **caractérisé en ce que**, lorsque le râteau andaineur est configuré pour la formation d'un andain central, les premier et deuxième ensembles de râtelage (50, 51) sont opérationnels et horizontaux, alors que le troisième ensemble de râtelage (3) est maintenu levé dans une position sensiblement verticale, à l'extrémité droite ou l'extrémité gauche du châssis arrière (2) ; lorsque le râteau andaineur est configuré pour la formation d'un seul andain latéral, le premier ensemble de râtelage (50) et le troisième ensemble de râtelage (3) sont opérationnels et horizontaux, avec le troisième ensemble de râtelage (3) positionné du côté droit du châssis arrière (2), alors que le deuxième ensemble de râtelage (51) est maintenu levé dans une position sensiblement verticale ; lorsque le râteau andaineur est configuré pour la formation de deux andains latéraux de petite taille, le premier ensemble de râtelage (50) et le troisième ensemble de râtelage (3) sont opérationnels et horizontaux, avec le troisième ensemble de râtelage (3) positionné du côté gauche du châssis arrière (2), alors que le deuxième ensemble de râtelage (51) est maintenu levé dans une position sensiblement verticale ; lorsque le râteau andaineur est configuré pour la formation d'un andain central avec son retournement et son déplacement ultérieurs, les premier, deuxième et troisième ensembles de râtelage (50, 51, 3) sont opérationnels et horizontaux, avec le troisième ensemble de râtelage (3) positionné au niveau de l'extrémité droite du châssis arrière (2) ; lorsque seuls deux des trois ensembles de râtelage (50, 51, 3) sont opérationnels et horizontaux, l'ensemble de râtelage restant étant déconnecté du râteau andaineur.
